# EUROPÄISCHE PATENTSCHRIFT

(11) **EP 1 534 551 B1**
(45) Veröffentlichungstag und Bekanntmachung des Hinweises auf die Patenterteilung: **15.11.2006**
(21) Anmeldenummer: 03756428.3
(22) Anmeldetag: 02.09.2003
(51) Int. Cl.: B60K 17/04

(54) **DIREKT ANGETRIEBENE ANTRIEBSACHSE MIT EINER EIN AXIAL FESTGELEGTES SONNENRITZEL AUFWEISENDEN GETRIEBESTUFE**
DIRECTLY DRIVEN DRIVE AXLE WITH A GEAR TRAIN COMPRISING AN AXIALLY-FIXED SUN PINION
ESSIEU MOTEUR A ENTRAINEMENT DIRECT PRESENTANT UN ETAGE D'ENGRENAGE POURVU D'UN PIGNON SOLAIRE A FIXATION AXIALE

(30) Priorität: 02.09.2002 DE 20213669 U
(43) Veröffentlichungstag der Anmeldung: 01.06.2005
(73) Patentinhaber: Ewald Speth Antriebstechnik GmbH, 42327 Wuppertal (DE)
(72) Erfinder: KEUTH, Karl-Heinz, 58553 Halver (DE)
(74) Vertreter: Müller, Karl-Ernst
(86) Internationale Anmeldenummer: PCT/DE2003/002896
(87) Internationale Veröffentlichungsnummer: WO 2004/022375

(56) Entgegenhaltungen:
- DE-U- 20 010 563
- US-A- 4 611 505
- US-A- 4 684 330

## Beschreibung

Die Erfindung betrifft eine Antriebsachse für elektromotorisch angetriebene Fahrzeuge mit einem auf der angetriebenen Motorwelle angeordneten Elektromotor und mit an die Motorwelle unter Zwischenschaltung einer drehzahlreduzierenden Getriebestufe sowie eines nachgeschalteten Differentialgetriebes angeschlossenen Antriebswellen für das jeweils darauf sitzende Rad, wobei als Teil der drehzahlreduzierenden Getriebestufe auf der in mit dem Getriebegehäuse der Getriebestufe verbundenen Motorwellenlagern gelagerten Motorwelle ein außenverzahntes Sonnenritzel angeordnet ist.

Eine Antriebsachse mit den gattungsgemäßen Merkmalen ist in der DE 200 10 563 U1 beschrieben. Soweit bei der bekannten Antriebsachse bereits zwischen die Motorwelle und das Differentialgetriebe ein weiteres drehzahlreduzierendes Planetengetriebe geschaltet ist, zeichnet sich die in der DE 200 10 563 U1 beschriebene besondere Bauform dadurch aus, daß die Planetenfunktion und die Differentialfunktion in einem in einem gehäusefest angeordneten innenverzahnten Hohlrad umlaufenden Planetendifferentialkäfig derart vereinigt sind, daß das von dem auf der Motorwelle angeordneten Sonnenritzel angetriebene Planetenrad in dem Planetendifferentialkäfig gelagert ist und in die Innenverzahnung des den Planetendifferentialkäfig außen umgreifenden Hohlrades eingreift.

Mit der bekannten Antriebsachse ist der Nachteil verbunden, daß das die Differentialgetriebestufe bildende Kegelradgetriebe über das konstruktiv damit vereinigte Planetengetriebe axiale Kräfte auf das mit der Motorwelle verbundene Sonnenritzel ausübt, so daß sich das Sonnenritzel auf der Motorwelle bei einem gleichzeitigen erheblichen Verschleiß der das Sonnenritzel auf der Motorwelle haltenden Anlaufscheibe verschiebt. Dies kann zu einer völligen Unbrauchbarkeit der Antriebsachse führen.

Der Erfindung liegt daher die Aufgabe zugrunde, bei einer Antriebsachse mit den gattungsgemäßen Merkmalen den vorgenannten Nachteil zu vermeiden.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die Motorwellenlager als radiale und axiale Kräfte aufnehmende Lager ausgebildet sind und zwischen den Motorwellenlagern und dem Sonnenritzel eine sich beidseitig gegen die Motorwellenlager und das Sonnenritzel abstützende Buchse angeordnet ist und das Sonnenritzel über ein an dem freien Ende der Motorwelle befindlichen Befestigungsmittel gegen die Buchse festgelegt ist, und daß das Sonnenritzel und die damit kämmenden Getrieberäder der drehzahlreduzierenden Getriebestufe als Schrägverzahnung mit einer in Richtung der Motorwellenlager wirkenden Kraftkomponente ausgebildet sind.

Mit der Erfindung ist der Vorteil verbunden, daß aufgrund der Zwischenschaltung der Buchse zwischen Sonnenritzel und Motorwellenlager das Sonnenritzel auf der Motorwelle gegen Verschiebung festgelegt ist. Soweit weiterhin axiale Kräfte auf das Sonnenritzel einwirken, werden diese axialen Kräfte nun mit konstruktiver Ausrichtung über die Buchse auf die mit dem Getriebegehäuse verbundenen Motorwellenlager übertragen, die zu diesem Zweck mit einer Bauform ausgelegt sind, die neben der Aufnahme der bei der Lagerung der Motorwelle aufzunehmenden radialen Kräfte zusätzlich zur Aufnahme von axialen Kräften geeignet ist. Da erfindungsgemäß vorgesehen ist, daß das Sonnenritzel und die damit kämmenden Getrieberäder der drehzahlreduzierenden Getriebestufe als Schrägverzahnung mit einer in Richtung der Motorwellenlager wirkenden Kraftkomponente ausgebildet sind, lassen sich die auftretenden axialen Kräfte zielgerichtet in die mit dem Getriebegehäuse verbundenen Motorwellenlager ableiten.

Nach einem Ausführungsbeispiel der Erfindung ist vorgesehen, daß sich das Sonnenritzel unmittelbar an der Buchse abstützt; alternativ kann eine mittelbare Abstützung des Sonnenritzels gegen die Buchse vorgesehen sein, indem zwischen Buchse und Sonnenritzel eine Zwischenscheibe angeordnet ist.

Zur Festlegung des Sonnenritzels ist nach einem Ausführungsbeispiel der Erfindung vorgesehen, daß das Befestigungsmittel das Sonnenritzel mit Vorspannung gegen die Buchse festlegt; dies setzt eine entsprechende Bauform des Motorwellenlagers voraus. Vorzugsweise ist jedoch vorgesehen, daß das Sonnenritzel zwischen der Buchse und dem Befestigungsmittel mit einem geringen Axialspiel angeordnet ist.

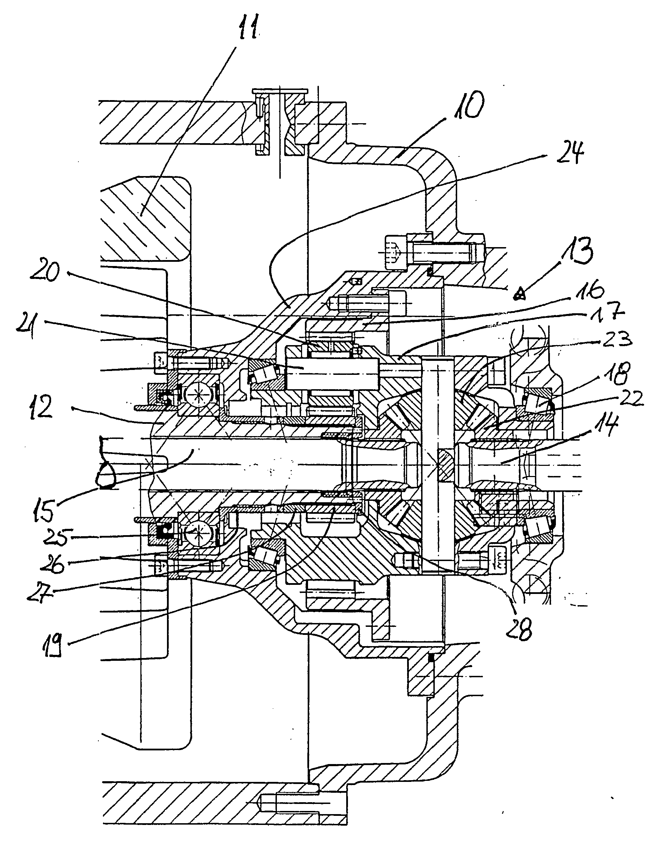

In der Zeichnung ist ein Ausführungsbeispiel wiedergegeben, welches nachstehend beschrieben ist. Die einzige Figur zeigt die Motorwellenlagerung mit angeschlossener drehzahlreduzierender Getriebestufe in einer ausschnittsweisen Darstellung.

Entsprechend dem zu der gattungsbildenden Antriebsachse in DE 200 10 563 U1 beschriebenen Aufbau ist in einem mit dem Chassis eines Fahrzeuges verbundenen Gehäuse 10 ein Drehstrommotor 11 angeordnet, der unmittelbar auf eine Motorwelle 12 wirkt und diese im Sinne einer Drehbewegung antreibt. An die Motorwelle 12 schließt eine mit dem Bezugszeichen 13 insgesamt bezeichnete und in einem mit dem Gehäuse 10 verbundenen Getriebegehäuse 24 untergebrachte Planeten-Differential-Getriebestufe an, die die Antriebsbewegung der Motorwelle 12 auf eine rechte Antriebswelle 14 und auf eine für das auf der gegenüberliegenden, linken Seite des Gehäuses angeordnete Antriebsrad bestimmte Antriebswelle 15 umsetzt. Hierzu ist die linke Antriebswelle 15 durch eine in der Motorwelle 12 ausgebildete Bohrung geführt. Den beiden Antriebswellen 14, 15 sind jeweils eine Bremsbaugruppe und ein weiteres einstufiges Planetengetriebe zum Antrieb der außen auf der Antriebsachse sitzenden Räder nachgeschaltet, wie dies in der gattungsbildenden Druckschrift im einzelnen beschrieben ist.

An das Getriebegehäuse 24 ist ein Hohlrad 16 angeschlossen, welches an seiner dem Getriebegehäuse 24 zugewandten Stirnseite offen ist und insoweit mit dem Getriebegehäuse 24 einen Einbauraum umschließt. In diesem Einbauraum ist ein Planetendifferentialkäfig 17 drehbar in Lagerstellen 18 gelagert, die einerseits gegen das Getriebegehäuse 24 und andererseits gegen das Hohlrad 16 abgestützt sind. Die Motorwelle 12 ragt bis in den Planetendifferentialkäfig 17 hinein und trägt ein mit einer Außenverzahnung versehenes Sonnenritzel 19, in welches ein außenverzahntes Planetenrad 20 eingreift, welches seinerseits mittels einer Lagerwelle 21 in dem Planetendifferentialkäfig 17 gelagert ist. Das außenverzahnte Planetenrad 20 steht weiterhin mit der Innenverzahnung des feststehenden Hohlrades 16 in Eingriff.

Axial neben der von dem Planetendifferentialkäfig 17 aufgenommenen Anordnung von Sonnenritzel 19 und Planetenrad 20 sind in dem Planetendifferentialkäfig in an sich bekannter Weise die Treibräder 22 zum Antrieb der beiden in den Planetendifferentialkäfig hineinreichenden Antriebswellen 14, 15 angeordnet, ferner die für die Funktion des Differentialgetriebes erforderlichen Ausgleichsräder 23.

Zur Lagerung der Motorwelle 12 sind mit dem Getriebehäuse 24 verbundene Motorwellenlager 25 angeordnet, die in ihrer Bauform so eingerichtet sind, daß neben den für die Motorwellenlagerung aufzunehmenden radialen Kräfte auch axiale Kräfte aufgenommen und über das Getriebegehäuse 24 in das Gehäuse 10 der Achse abgeleitet werden können. Zwischen den Motorwellenlagern 25 und dem Sonnenritzel 19 sind eine Buchse 26 sowie eine Zwischenscheibe 27 auf der Motorwelle 12 angeordnet, die eine axiale Abstützung für das an die Zwischenscheibe 27 anschließende Sonnenritzel 19 bilden; das Sonnenritzel 19 ist auf der Motorwelle 12 durch eine auf dem freien Ende der Motorwelle 12 aufgeschraubte Mutter als Befestigungsmittel 28 festgelegt. Bei dem dargestellten Ausführungsbeispiel ist das Sonnenritzel 19 zwischen seiner axialen Abstützung gegen die Zwischenscheibe 27 und der Befestigungsmutter 28 mit einem geringen axialen Spiel angeordnet.

Wird beim Betrieb der Antriebsachse die Motorwelle 12 vom Drehstromotor 11 mit hoher Drehzahl angetrieben, so wird die hohe Drehzahl der Motorwelle 12 über das Sonnenritzel 19 und das Planetenrad 20 bereits mit einer Untersetzung auf den Planetendifferentialkäfig 17 übertragen, der seinerseits die Treibräder 22 mit einer reduzierten Drehzahl antreibt, so daß die Beanspruchung der Treibräder 22 wie auch der Ausgleichsräder 23 aufgrund der reduzierten Drehzahl erheblich herabgesetzt ist. Soweit insbesondere von der Differentialstufe über den Planetendifferentialkäfig 17 und die Planetenräder 20 axiale Kräfte auf das Sonnenritzel 19 einwirken, werden diese axialen Kräfte von der das Sonnenritzel 19 gegen die Motorwellenlager 25 abstützenden Buchse 26 mit Zwischenscheibe 27 auf die Motorwellenlager 25 übertragen und hier in das Getriebegehäuse 24 bzw. das Gehäuse 10 der Achse abgeleitet.

## Patentansprüche

1. Antriebsachse für elektromotorisch angetriebene Fahrzeuge mit einem auf der angetriebenen Motorwelle (12) angeordneten Elektromotor (11) und mit an die Motorwelle (12) unter Zwischenschaltung einer drehzahlreduzierenden Getriebestufe (13) sowie eines nachgeschalteten Differentialgetriebes angeschlossenen Antriebswellen (14, 15) für das jeweils darauf sitzende Rad, wobei als Teil der drehzahlreduzierenden Getriebestufe auf der in mit dem Getriebegehäuse der Getriebestufe verbundenen Motorwellenlagern (25) gelagerten Motorwelle (12) ein außenverzahntes Sonnenritzel (19) angeordnet ist, **dadurch gekennzeichnet, daß** die Motorwellenlager (25) als radiale und axiale Kräfte aufnehmende Lager ausgebildet sind und zwischen den Motorwellenlagern (25) und dem Sonnenritzel (19) eine sich beidseitig gegen die Motorwellenlager (25) und das Sonnenritzel (19) abstützende Buchse (26) angeordnet ist und das Sonnenritzel (19) über ein an dem freien Ende der Motorwelle (12) befindlichen Befestigungsmittel (28) gegen die Buchse (26) festgelegt ist, und daß das Sonnenritzel (19) und die damit kämmenden Getrieberäder (20) der drehzahlreduzierenden Getriebestufe (13) als Schrägverzahnung mit einer in Richtung der Motorwellenlager (25) wirkenden Kraftkomponente ausgebildet sind.

2. Antriebsachse nach Anspruch 1, **dadurch gekennzeichnet, daß** sich das Sonnenritzel (19) unmittelbar an der Buchse (26) abstützt.

3. Antriebsachse nach Anspruch 1, **dadurch gekennzeichnet, daß** zwischen Buchse (26) und Sonnenritzel (19) eine Zwischenscheibe (27) angeordnet ist.

4. Antriebsachse nach einem der Ansprüche 1 bis 3, **dadurch gekennzeichnet, daß** das Befestigungsmittel (28) das Sonnenritzel (19) mit Vorspannung gegen die Buchse (26) festlegt.

5. Antriebsachse nach einem der Ansprüche 1 bis 3, **dadurch gekennzeichnet, daß** das Sonnenritzel (19) zwischen der Buchse (26) und dem Befestigungsmittel (28) mit einem geringen Axialspiel angeordnet ist.

## Claims

1. Driving axle for electrically driven vehicles with an electric motor (11) disposed on the driven motor shaft (12) and with drive shafts (14, 15) which are coupled to the motor shaft (12), via the interposition of a reduction transmission stage (13) as well as a following differential transmission, and which are intended for the wheel seated thereon, whereby as part of the reduction transmission stage, an externally toothed sun pinion (19) is disposed on the motor shaft (12), which is mounted in motor shaft bearings (25) connected with the gearbox of the transmission stage, **characterized in that** the motor shaft bearings (25) are embodied as bearings that absorb radial and axial forces and between the motor shaft bearings (25) and the sun pinion (19) there is disposed a sleeve (26) that is supported on both sides against the motor shaft bearings (25) and the sun pinion (19) and the sun pinion (19), via a securing means (28) disposed on the free end of the motor shaft (12), is fixed against the sleeve (26), and **in that** the sun pinion (19), and the gears (20) of the reduction transmission stage (13) that meshes therewith, are embodied as helical gears having a force component that acts in the direction of the motor shaft bearings (25).

2. Driving axle according to claim 1, **characterized in that** the sun pinion (19) is supported directly against the sleeve (26).

3. Driving axle according to claim 1, **characterized in that** an intermediate or spacer disk (27) is disposed between sleeve (26) and sun pinion (19).

4. Driving axle according to one of the claims 1 to 3, **characterized in that** the securing means (28) fixes the sun pinion (19) against the sleeve (26) with preload or bias.

5. Driving axle according to one of the claims 1 to 3, **characterized in that** the sun pinion (19) is disposed between the sleeve (26) and the securing means (28) with slight axial play.

## Revendications

1. Essieu moteur pour des véhicules actionnés par force électromotrice, comportant un moteur électrique (11), monté sur l'arbre du moteur (12) entraîné, et comportant des arbres d'entraînement (14, 15), destinés respectivement à la roue montée sur chacun d'entre eux et reliés à l'arbre du moteur (12) moyennant le montage intermédiaire d'un étage d'engrenage (13) réduisant la vitesse de rotation, ainsi que d'un différentiel monté en aval, un pignon solaire (19) à denture extérieure, faisant partie de l'étage d'engrenage réduisant la vitesse de rotation, étant disposé sur l'arbre du moteur (12) monté dans des paliers (25) reliés au carter de l'étage d'engrenage, **caractérisé en ce que** les paliers (25) de l'arbre du moteur sont réalisés sous forme de paliers absorbant les forces radiales et axiales et un coussinet (26) est disposé entre les paliers (25) de l'arbre du moteur et le pignon solaire (19) en prenant appui de part et d'autre contre les paliers (25) de l'arbre du moteur et le pignon solaire (19), et le pignon solaire (19) est fixé contre le coussinet (26) par l'intermédiaire d'un moyen de fixation (28) situé sur l'extrémité libre de l'arbre du moteur (12), et **en ce que** le pignon solaire (19) et les roues d'engrenage (20) de l'étage d'engrenage (13) réduisant la vitesse de rotation, lesquelles engrènent avec ledit pignon, sont réalisées sous forme de denture hélicoïdale avec une composante de force agissant vers les paliers (25) de l'arbre du moteur.

2. Essieu moteur selon la revendication 1, **caractérisé en ce que** le pignon solaire (19) prend appui directement sur le coussinet (26).

3. Essieu moteur selon la revendication 1, **caractérisé en ce qu'**un disque intermédiaire (27) est disposé entre le coussinet (26) et le pignon solaire (19).

4. Essieu moteur selon l'une quelconque des revendications 1 à 3, **caractérisé en ce que** le moyen de fixation (28) fixe le pignon solaire (19) sous précontrainte contre le coussinet (26).

5. Essieu moteur selon l'une quelconque des revendications 1 à 3, **caractérisé en ce que** le pignon solaire (19) est disposé avec un faible jeu axial entre le coussinet (26) et le moyen de fixation (28).
